# EUROPEAN PATENT APPLICATION

(11) **EP 2 085 624 A1**
(43) Date of publication of application: **05.08.2009**
(21) Application number: 07831355.8
(22) Date of filing: 07.11.2007
(51) Int. Cl.: F16B 15/06, F16B 15/00

(54) **STEPPED CONCRETE PIN**

(30) Priority: 07.11.2006 JP 2006301661
(71) Applicant: Max Co., Ltd., Chuo-ku Tokyo 103-8502 (JP)
(72) Inventor: HIRANUMA, Toshio c/o Max Co., Ltd., Tokyo 103-8502 (JP); BAN, Takanori c/o Max Co., Ltd., Tokyo 103-8502 (JP); HOUJYOU, Takao c/o Max Co., Ltd., Tokyo 103-8502 (JP); KOBAYASHI, Kunitaka c/o Max Co., Ltd., Tokyo 103-8502 (JP)
(74) Representative: Samson & Partner
(86) International application number: PCT/JP2007/071624
(87) International publication number: WO 2008/056695

(57) **Abstract**

A stepped concrete pin includes a head portion and a shaft portion downwardly extending from a lower face of the head portion. The shaft portion includes a first shaft part downwardly extending from the head portion and having a diameter which is constant in a downward direction, a tapered part downwardly extending from a lower end of the first shaft part and having a diameter which gradually decreases in the downward direction, a second shaft part downwardly extending from a lower end of the tapered part and having a diameter which is constant in the downward direction and is narrower than the first shaft part, and a tip end part downwardly extending from a lower end of the second shaft part and having a diameter which gradually deceases in the downward direction. Knurl grooves are formed on an outer face of the first shaft part. Instead of forming the knurl grooves, an adhesive agent may be applied to at least a part of the shaft portion.

## Description

### TECHNICAL FIELD

The present invention relates to a stepped concrete pin which is used for securing a metallic plate or a wooden plate to a concrete surface.

### BACKGROUND ART

Generally, when securing a light-gauge steel or a metal piece to a concrete structure, a hardened straight nail or a concrete pin having a bullet-shaped tip is struck into the concrete using a striking tool.

Concrete pins have a problem that a penetrating resistance is large in an initial stage of striking, i.e., when a tip end part enters into the concrete. In particular, when striking a concrete pin into a recently-increasing high hardness PC (precast concrete) material, the concrete pin may penetrate in a bent state. In order to address this drawback, there is proposed a concrete pin in which a plurality of vertical grooves are formed at equal intervals on a tip end side of a shaft portion while maintaining a tip end part to have a certain size (see, e.g., JP 2004-183708 A).

Further, when the concrete pin is instantaneously struck into the concrete with a large force, cracks are likely to occur due to a destructive force at the time of entering into the concrete. In order to address this drawback, there is proposed a two-step pin in which a shaft portion of the concrete pin has a large-diameter part on a side of a head portion and a small-diameter part on a side of a tip end (see, e.g., JP 2004-144121 A). Moreover, there is also proposed a two-step concrete pin having a plurality of parallel oblique grooves on a shaft portion so that, when the concrete pin is struck, the concrete pin rotates while penetrating into the concrete, whereby the penetrating resistance is reduced (see, e.g., JP 2002-081424 A). Because the oblique grooves are formed in this two-step concrete pin, a surface area of the shaft portion is increased. Accordingly, a contact area with respect to the concrete at the time when the striking is finished is increased, whereby a pulling-out resistance is improved.

In the stepped concrete pins described above, the penetrating resistance in the initial stage of striking is small. However, a holding force after the striking tends to decrease as compared with straight concrete pins. Moreover, most of the stepped concrete pins are not sufficiently adapted to, i.e., cannot be struck into, a very hard concrete such as ultra-high hardness concrete which is currently being developed and put into practical use.

### DISCLOSURE OF THE INVENTION

It is an object of the present invention to provide a stepped concrete pin having a small penetrating resistance in an initial stage of striking, and also capable of ensuring a sufficient holding force after the striking.

According to one or more embodiments of the present invention, a stepped concrete pin includes a head portion and a shaft portion downwardly extending from a lower face of the head portion. The shaft portion includes a first shaft part downwardly extending from the head portion and having a diameter which is constant in a downward direction, a tapered part downwardly extending from a lower end of the first shaft part and having a diameter which gradually decreases in the downward direction, a second shaft part downwardly extending from a lower end of the tapered part and having a diameter which is constant in the downward direction and is narrower than the first shaft part, and a tip end part downwardly extending from a lower end of the second shaft part and having a diameter which gradually deceases in the downward direction. Knurl grooves are formed on an outer face of the first shaft part. Instead of forming the knurl grooves, an adhesive agent may be applied to at least a part of the shaft portion.

According to one or more embodiments of the present invention, a stepped concrete pin includes a head portion and a shaft portion downwardly extending from a lower face of the head portion. The shaft portion includes a first shaft part downwardly extending from the head portion and having a diameter which is constant in a downward direction, a first tapered part downwardly extending from a lower end of the first shaft part and having a diameter which gradually decreases in the downward direction, a third shaft part downwardly extending from a lower end of the first tapered part and having a diameter which is constant in the downward direction and is narrower than the first shaft part, a second tapered part downwardly extending from a lower end of the third shaft part and having a diameter which gradually decreases in the downward direction, a second shaft part downwardly extending from a lower end of the second tapered part and having a diameter which is constant in the downward direction and is narrower than the third shaft part, and a tip end part downwardly extending from a lower end of the second shaft part and having a diameter which gradually decreases in the downward direction.

It should be noted that "having a diameter which is constant" means "having a diameter which is substantially constant". For example, even in case in which the outer face is formed with grooves or the like so that a sectional shape varies along an axial direction, it is included in "having a diameter which is constant" in so far as the largest diameters in the respective sections are substantially constant.

Other aspects and advantages of the invention will be apparent from the following description, the drawings and the claims.

### BRIEF DESCRIPTION OF THE DRAWINGS

Fig. 1 is a perspective view of a stepped concrete pin according to a first embodiment of the present invention, illustrating a state in which it is struck into concrete.
Fig. 2 is a perspective view of a stepped concrete pin according to a modification of the first embodiment.
Fig. 3 is a perspective view of a stepped concrete pin according to another modification of the first embodiment.
Fig. 4 is a perspective view of a stepped concrete pin according to yet another modification of the first embodiment.
Fig. 5 is a perspective view of a stepped concrete pin according to yet another modification of the first embodiment.
Fig. 6 is a perspective view of a stepped concrete pin according to yet another modification of the first embodiment.
Fig. 7 is a perspective view of a stepped concrete pin according to yet another modification of the first embodiment.
Fig. 8 is a perspective view of a stepped concrete pin according to yet another modification of the first embodiment.
Fig. 9 is a perspective view of a stepped concrete pin according to a second embodiment of the present invention.
Fig. 10 is a perspective view of a stepped concrete pin according to a modification of the second embodiment.
Fig. 11 is a perspective view of a stepped concrete pin according to yet another modification of the second embodiment.
Fig. 12 is a perspective view of a stepped concrete pin according to yet another modification of the second embodiment.
Fig. 13 is a perspective view of a stepped concrete pin according to yet another modification of the second embodiment.
Fig. 14 is a perspective view of a stepped concrete pin according to yet another modification of the second embodiment.
Fig. 15 is a perspective view of a stepped concrete pin according to yet another modification of the second embodiment.
Fig. 16 is a perspective view of a stepped concrete pin according to yet another modification of the second embodiment.

### EXPLANATION OF REFERENCE NUMERALS

- 1, 4: Stepped Concrete Pin
- 3a, 13a: Large-Diameter Shaft Part
- 3b, 13b: Small-Diameter Shaft Part
- 13c: Intermediate-Diameter Shaft Part
- 7: Vertical Grooves

### BEST MODE FOR CARRYING OUT THE INVENTION

Hereinafter, embodiments of the present invention will be described in detail with reference to the drawings.

### (Embodiment 1)

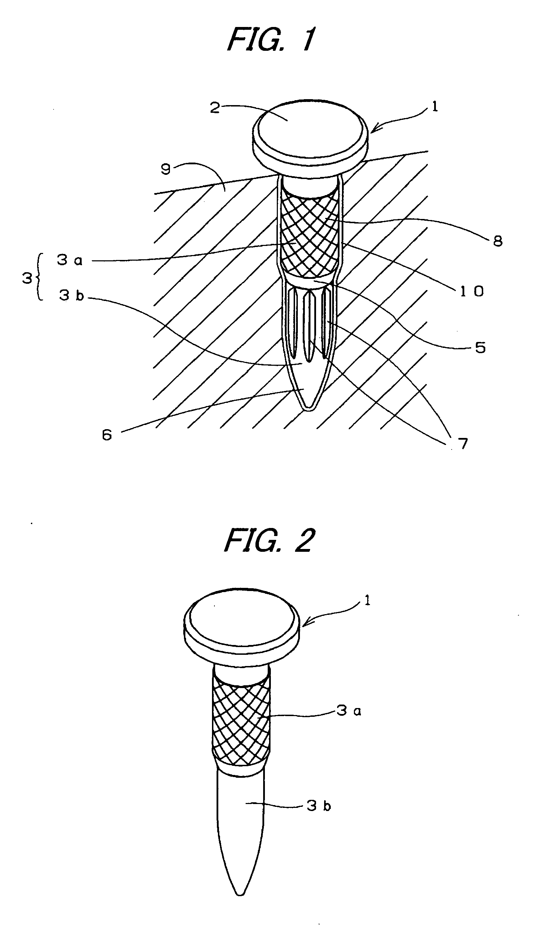

Fig. 1 is a perspective view of a stepped concrete pin 1 (hereinafter simply referred to as a two-step pin 1) according to a first embodiment of the present invention.

As shown in Fig. 1, the two-step pin 1 includes an enlarged-diameter head portion 2 and a shaft portion 3. The shaft portion 3 includes a large-diameter shaft part 3a (a first shaft part) on a side of the enlarged diameter head portion 2 and a small-diameter shaft part 3b (a second shaft part) on a side of a tip end. The large-diameter shaft part 3a and the small-diameter shaft part 3b are connected via a tapered part 5. A tip end part 6 is formed in a pointed shape.

The small-diameter shaft part 3b has a smaller diameter than a small-diameter shaft part of the conventional two-step pin. A plurality of vertical grooves 7 are formed on a peripheral face of the small-diameter shaft part 3b. Each of the vertical grooves 7 is continuously formed in the axial direction so as to be parallel to one another. The vertical groove 7 is not limited to a V-shape but may also be a U-shape. The vertical grooves 7may be formed so as to extend up to a tip end of the small-diameter shaft part 3b.

Knurl grooves 8 are formed on a peripheral face of the large-diameter shaft part 3a. The knurl grooves 8 may be formed on the entire large-diameter shaft part 3a.

Striking of the two-step pin 1 into concrete 9 will be described below.

When the two-step pin 1 is loaded in a nailer and is struck toward the concrete 9, the tip end of the two-step pin 1 enters into the concrete 9. At this time, a penetrating resistance is relatively small because the small diameter head portion 3b on the side of the tip end is narrowly formed. Moreover, because the vertical grooves 7 are formed, an area enclosed by a line connecting respective bottoms of the vertical grooves 7 is small. Therefore, the penetrating resistance of the small-diameter shaft part 3b in the initial stage of striking is made even smaller as compared with a case in which the vertical grooves 7 are not provided. Further, because the two-step pin 1 is to be entered in the direction of vertical grooves 7, a penetrating direction of the two-step pin 1 is stabilized. Accordingly, penetrating performance at the time of striking is enhanced, and the two-step pin 1 can reliably be caused to penetrate in a straight direction without being bent even into an ultra-high hardness concrete. After the striking, because a contact area between the vertical grooves 7 and an inner face of a penetration hole 10 in the concrete 9 is large, a pulling-out resistance is enhanced.

Further, because the knurl grooves 8 are formed in the large diameter portion 3a, a surface area of the large-diameter shaft part 3a is large. Accordingly, after the striking, a contact area between the inner face of the penetration hole 10 in the concrete 9 and the shaft portion 3 of the two-step pin 1 is remarkably increased. Moreover, because directions of the knurl grooves 8 are different from a pulling-out direction, the resistance to the pulling-out from the penetration hole 10 in the concrete 9 is large (i.e., the friction between the knurl grooves 8 and the penetration hole 10 in the concrete 9 is large). That is, the holding force is sufficiently ensured, and the pulling-out resistance is remarkably enhanced. In addition, because the knurl grooves 8 do not affect the penetrating direction at the time of striking unlike spiral grooves, the penetrating performance at the time of striking is not deteriorated.

Because the penetrating resistance of the small-diameter shaft part 3b is already small due to it's small diameter, the peripheral face of the small diameter portion 3b may be formed as a smooth surface, as shown in Fig. 2.

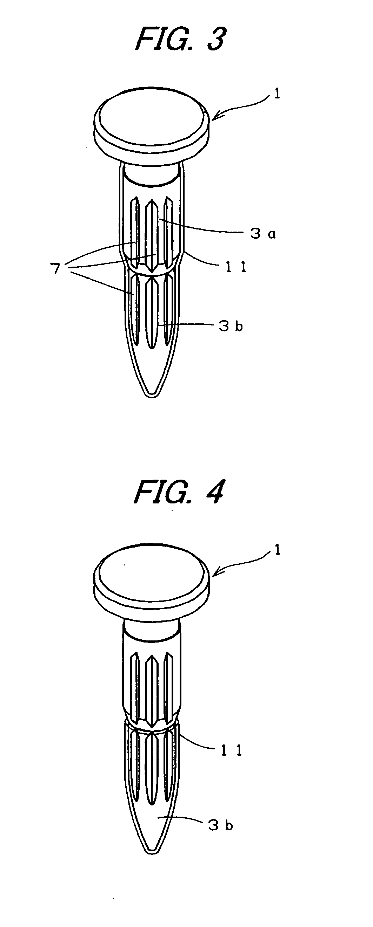

Means for reinforcing the holding force is not limited to the knurl grooves 8 formed on the peripheral face of the large-diameter shaft part 3a. For example, as shown in Fig. 3, an agent 11, such as a solid paint or a coating agent, may be applied to an entire peripheral face including the large-diameter shaft part 3a and the small-diameter shaft part 3b.

The agent 11 reinforces the holding force, and make the two-step pin 1 difficult to be pulled out from the concrete after the penetration. "ThreeBond 2446" (trademark) of aqueous epoxy type produced by precoat bolt MEC process, a product of ThreeBond Co., Ltd., or a bonding agent containing liquid or solid bonding main agent enclosed in micro capsules, a product of Japan Capsular Products, Inc. may be used as the agent 11.

In a case in which the agent 11 is applied to the shaft portion 3, the penetrating resistance at the time of striking the two-step pin 1 into the concrete is reduced due to a lubricating function of the agent 11. Therefore, the two-step pin 1 can easily penetrate even into the high hardness concrete. Moreover, after the two-step pin 1 has penetrated into the concrete, the agent 11 bonds the two-step pin 1 to the inner face of the penetration hole in the concrete. Therefore, the holding force of the two-step pin 1 can be sufficiently ensured and the pulling-out resistance is remarkably enhanced.

In a modification shown in Fig. 3, the vertical grooves 7 are formed in both the large-diameter shaft part 3a and the small-diameter shaft part 3b, and therefore, the penetrating resistance is small. Moreover, the holding force can be reinforced by applying the agent 11.

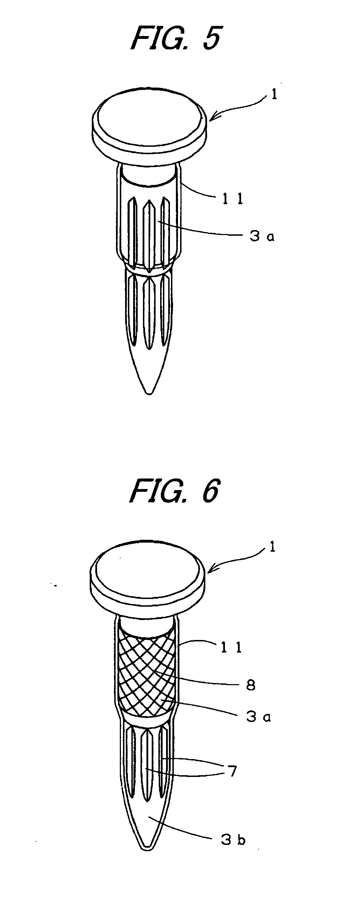

The agent 11 need not necessarily be applied to the entire peripheral face of the large-diameter shaft part 3a and the small-diameter shaft part 3b. As shown in Fig. , the agent 11 may be applied only to the small-diameter shaft part 3b. As shown in Fig. 5, the agent 11 may be applied only to the large-diameter shaft part 3a,.

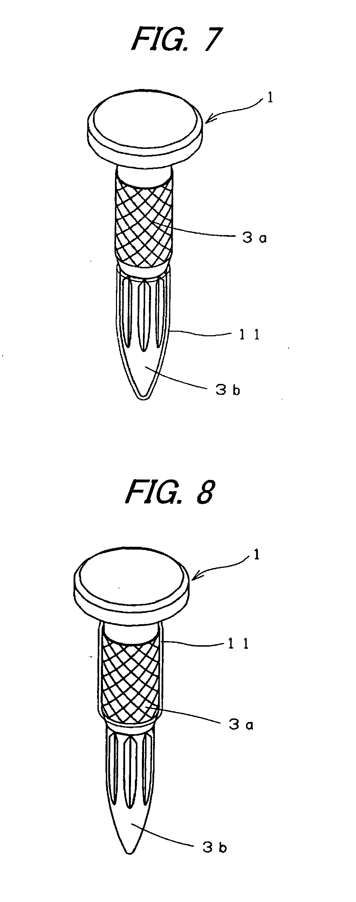

Further, also in a case in which the knurl grooves 8 are formed on the large-diameter shaft part 3a, the agent 11 may be applied to the entire peripheral face of the large-diameter shaft part 3a and the small-diameter shaft part 3b, as shown in Fig. 6. As shown in Fig. , the agent 11 may be applied only to the small-diameter shaft part 3b. As shown in Fig. 8, the agent 11 may be applied only to the large-diameter shaft part 3a. Moreover, the agent 11 may be applied to the entire small-diameter shaft part 3b and a half of the large-diameter shaft part 3a.

### (Embodiment 2)

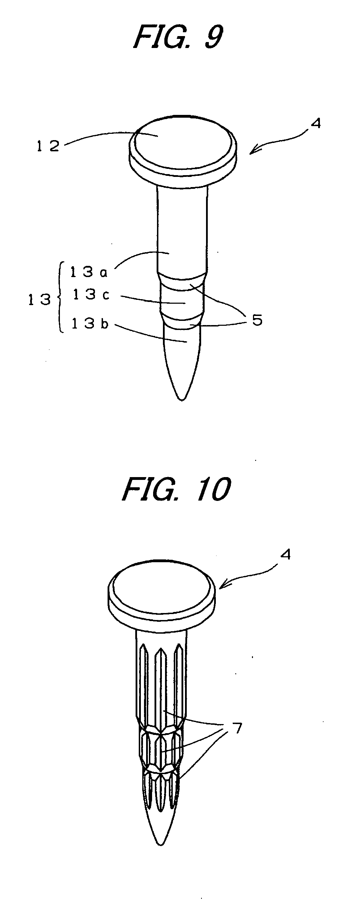

Fig. 9 is a perspective view of a stepped concrete pin 4 having three steps (hereinafter simply referred to as a three-step pin 4) according to a second embodiment of the present invention. The three-step pin 4 includes an enlarged diameter head portion 12 and a shaft portion 13. The shaft portion 13 includes a large-diameter shaft part 13a (a first shaft part) on a side of the enlarged diameter head portion 2, an intermediate-diameter shaft part 13c (a third shaft part) in an intermediate section, and a small-diameter shaft part 13b (a second shaft part) on a side of a tip end. The large-diameter shaft part 13a, the intermediate-diameter shaft part 13c and the small-diameter shaft part 13b are connected via tapered parts 5.

The small-diameter shaft part 13b is made narrower than a small-diameter shaft part of the conventional two-step pin, whereby the penetrating resistance is reduced. Moreover, because the diameter is gradually increased from the intermediate-diameter shaft part 13c to the large-diameter shaft part 13a, buckling is unlikely to occur. Further, it is possible to increase the holding force, by making the large-diameter shaft part 13a thicker than the large-diameter shaft part 3a of the two-step pin 1 of the first embodiment.

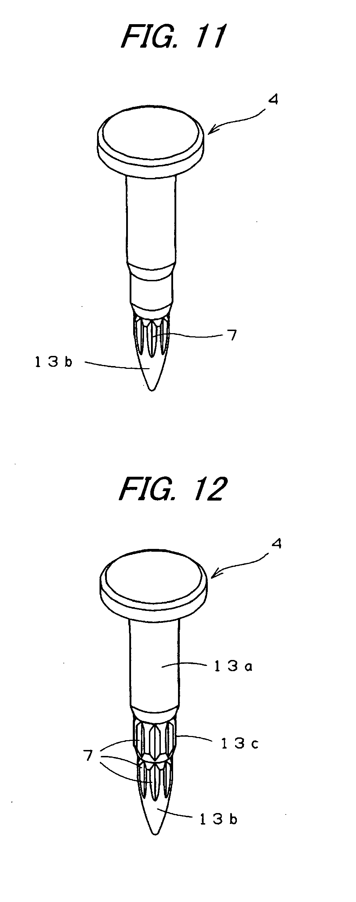

Because the holding force can be ensured by making the large-diameter shaft part 13a thicker, it is possible to reliably strike the three-step pin 4 even into the ultra-high hardness concrete while reducing the penetrating resistance by forming a plurality of the vertical grooves 7 in the entire shaft portion, as shown in Fig. 10. Moreover, the penetrating direction can also be stabilized. As shown in Fig. 11, the vertical grooves 7 may be formed only in the small-diameter shaft part 13b. As shown in Fig. 12, the vertical grooves 7 may be formed in the intermediate-diameter shaft part 13c and in the small-diameter shaft part 13b.

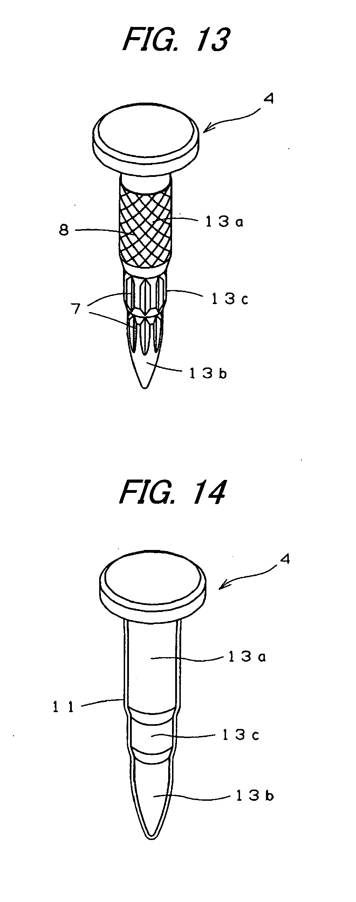

As shown in Fig. 13, the knurl grooves 8 may be formed in the large-diameter shaft part 13a while forming the vertical grooves 7 in the intermediate shaft portion 13c and in the small-diameter shaft part 13b. In this case, both the reduction of the penetrating resistance and the reinforcement of the holding force can be more effectively obtained.

In order to further reinforce the holding force, for example, the agent 11 may be applied to the entire peripheral face including the large-diameter shaft part 13a, the intermediate-diameter shaft part 13c, and the small-diameter shaft part 13b, as shown in Fig. 14. In this case, the penetrating resistance at the time of striking the three-step pin 4 into the concrete is reduced due to the lubricating function of the agent 11, and the three-step pin 4 can easily penetrate even into the high hardness concrete. After the three-step pin 4 has penetrated into the concrete, the agent 11 bonds the three-step pin 4 to the inner face of the penetration hole in the concrete. Therefore, the holding force of the three-step pin 4 is sufficiently ensured, and the pulling-out resistance is remarkably enhanced.

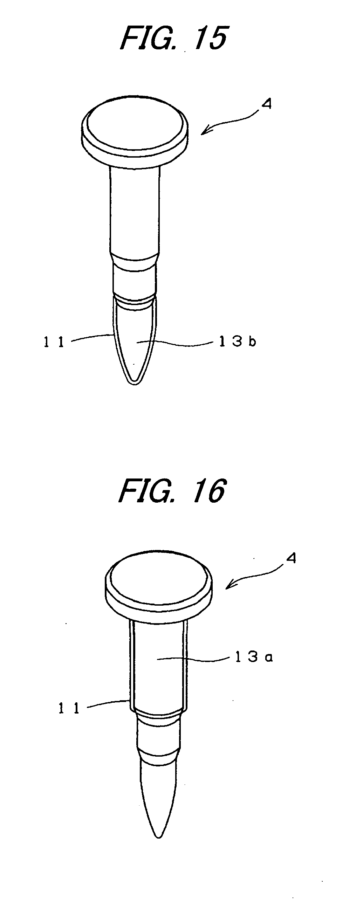

The agent 11 need not necessarily be applied to the entire peripheral surface of the large-diameter shaft part 13a and the small-diameter shaft part 13b. As shown in Fig. 15, the agent 11 may be applied only to the small-diameter shaft part 13b. As shown in Fig. 16, the agent 11 may be applied only to the large-diameter shaft part 13a. The agent 11 may be applied to the entire small-diameter shaft part 13b and a half of the intermediate-diameter shaft part 13c.

Moreover, the agent 11 may be applied to the three-step pin 4 which is formed with the vertical grooves 7 or the knurl grooves 8.

While the embodiments of the present invention have been described, it is apparent to those skilled in the art that various changes and modifications can be made therein without departing from the spirit and scope of the invention.

The present application is based on Japanese Patent Application No. 2006-301661 filed on November 7, 2000, the content of which is incorporated herein by reference.

### INDUSTRIAL APPLICABILITY

It is possible to provide a stepped concrete pin having a small penetrating resistance in an initial stage of striking, and also capable of ensuring a holding force.

## Claims

1. A stepped concrete pin comprising:
a head portion; and
a shaft portion downwardly extending from a lower face of the head portion,
wherein said shaft portion comprises:
a first shaft part downwardly extending from the head portion and having a diameter which is constant in a downward direction;
a tapered part downwardly extending from a lower end of the first shaft part and having a diameter which gradually decreases in the downward direction;
a second shaft part downwardly extending from a lower end of the tapered part and having a diameter which is constant in the downward direction and is narrower than the first shaft part; and
a tip end part downwardly extending from a lower end of the second shaft part, and having a diameter which gradually decreases in the downward direction, and
wherein knurl grooves are formed in an outer face of the first shaft part.

2. The stepped concrete pin according to claim 1, wherein a direction in which the knurl grooves are formed is different from the downward direction.

3. The stepped concrete pin according to claim 1, further comprising an adhesive agent which is applied to at least a part of the shaft portion.

4. A stepped concrete pin comprising:
a head portion;
a shaft portion downwardly extending from a lower face of the head portion; and
an adhesive agent which is applied to at least a part of the shaft portion,
wherein said shaft portion comprises:
a first shaft part downwardly extending from the head portion and having a diameter which is constant in a downward direction;
a tapered part downwardly extending from a lower end of the first shaft part and having a diameter which gradually decreases in the downward direction;
a second shaft part downwardly extending from a lower end of the tapered part and having a diameter which is constant in the downward direction and is narrower than the first shaft part; and
a tip end part downwardly extending from a lower end of the second shaft part, and having a diameter which gradually decreases in the downward direction.

5. The stepped concrete pin according to claim 4, wherein a plurality of vertical grooves are formed in at least an outer face of the second shaft part.

6. A stepped concrete pin comprising:
a head portion; and
a shaft portion downwardly extending from a lower face of the head portion,
wherein said shaft portion comprises:
a first shaft part downwardly extending from said head portion and having a diameter which is constant in a downward direction;
a first tapered part downwardly extending from a lower end of the first shaft part and having a diameter which gradually decreases in the downward direction;
a third shaft part downwardly extending from a lower end of the first tapered part and having a diameter which is constant in the downward direction and is narrower than the first shaft part;
a second tapered part downwardly extending from a lower end of the third shaft part and having a diameter which gradually decreases in the downward direction;
a second shaft part downwardly extending from a lower end of the second tapered part and having a diameter which is constant in the downward direction and is narrower than the third shaft part; and
a tip end part downwardly extending from a lower end of the second shaft part and having a diameter which gradually decreases in the downward direction.

7. The stepped concrete pin according to claim 6, wherein a plurality of vertical grooves are formed in at least an outer face of the second shaft part.

8. The stepped concrete pin according to claim 6, wherein knurl grooves are formed in an outer face of the first shaft part.

9. The stepped concrete pin according to claim 6, wherein a direction in which the knurl grooves are formed is different from the downward direction.

10. The stepped concrete pin according to claim 6, further comprising an adhesive agent which is applied to at least a part of the shaft portion.
